(19) Europäisches Patentamt
European Patent Office
Office européen des brevets

(11) EP 0 744 124 B1

(12) # FASCICULE DE BREVET EUROPEEN

(45) Date de publication et mention de la délivrance du brevet: **07.01.1999 Bulletin 1999/01**

(51) Int. Cl.$^6$: **A01N 43/707**
// (A01N43/707, 43:653)

(21) Numéro de dépôt: **96401101.9**

(22) Date de dépôt: **21.05.1996**

(54) **Traitement et compositions herbicides perfectionnés à base d'aminotriazole**
Herbizide Zusammensetzungen und Verfahren auf der Basis von Aminotriazol
Herbicidal compositions and treatment on the basis of aminotriazole

(84) Etats contractants désignés:
**AT BE DE ES FR GB GR IT NL PT**

(30) Priorité: **24.05.1995 FR 9506242**

(43) Date de publication de la demande:
**27.11.1996 Bulletin 1996/48**

(73) Titulaire: **CFPI AGRO**
**92233 Gennevilliers (FR)**

(72) Inventeurs:
- **Schapira, Joseph**
**75015 Paris (FR)**
- **Maillet, Isabelle**
**75012 Paris (FR)**
- **Sergent, Gérard**
**92300 Levallois Perret (FR)**

(74) Mandataire: **Koch, Gustave**
**Cabinet PLASSERAUD**
**84, rue d'Amsterdam**
**75440 Paris Cédex 09 (FR)**

(56) Documents cités:
**DE-A- 1 815 145**

EP 0 744 124 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention a pour objet un traitement herbicide et des compositions herbicides perfectionnés à base d'aminotriazole.

Elle vise également un procédé de mise en oeuvre desdites compositions.

On connaît déjà des traitements et des compositions herbicides dans lesquels la substance active est constituée par l'aminotriazole, ou 1H-1,2,4-triazol-3-amine de formule

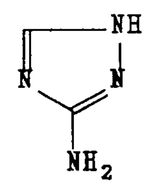

qui est un herbicide bien connu, largement utilisé en désherbage sélectif ou total et donnant toute satisfaction; il est généralement mis en oeuvre à des doses d'environ 2000 à 5000 g/ha.

On connaît également des traitements et des compositions herbicides dans lesquels la substance active est constituée par des triazinones constituées par les 4-amino-6-(1,1-diméthyléthyl)-3-(alkylthio)-1,2,4-triazin-5(4H)-ones représentées par la formule:

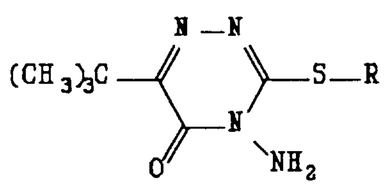

(I)

dans laquelle R représente un radical alkyle à chaîne rectiligne ou ramifiée comportant de 1 à 4 atomes de carbone; ces triazinones sont des herbicides connus; elles sont généralement mises en oeuvre à des doses de 500 à 900 g/ha.

Il a enfin été proposé, par le document DOS 18 15 145, d'appliquer des traitements de désherbage total à des chemins, des places, des voies de chemin de fer et des surfaces non cultivées, en utilisant des herbicides totaux comprenant une combinaison de deux matières actives constituées respectivement par l'aminotriazole et par une 4-amino-1,2,4-triazine-one présents en des proportions de 4:1 à 1:4, soit de 25 à 400% de triazinone par rapport à l'aminotriazole, ladite combinaison de matières actives étant mise en oeuvre à des doses de 5 à 50 kg/ha; chacun des deux produits constitutifs de la combinaison de matières actives est donc mis en oeuvre à des doses auxquelles il développe pleinement son effet herbicide.

La Société Demanderesse, poursuivant des recherches visant à optimiser l'utilisation de l'aminotriazole, a pu trouver qu'il était possible de façon tout à fait surprenante et inattendue, de potentialiser les effets herbicides de l'aminotriazole dès lors que ce produit, appliqué aux doses usuelles par hectare, se trouve en présence, au contact des espèces végétales à détruire, d'une très faible proportion de certains des représentants de la susdite famille de triazinones, ladite proportion correspondant à une quantité par hectare de ces triazinones inférieure à environ 300 g et pour laquelle lesdites triazinones présenteraient, si elles étaient utilisées seules, une activité herbicide tout à fait insuffisante, voire négligeable à nulle, lesdits représentants étant plus particulièrement ceux connus sous les appellations de métribuzine et d'éthiozine pour lesquels R correspond respectivement à un radical méthyle et éthyle dans la formule (I).

Il s'ensuit que

- le traitement herbicide à base d'aminotriazole conforme à l'invention est caractérisé par le fait qu'on applique sur les espèces végétales à détruire, simultanément ou séparément l'un de l'autre, d'une part une quantité de 500 à 5000 g/ha d'aminotriazole et, d'autre part une quantité inférieure à 300 g/ha, de préférence inférieure à 200 g/ha et plus préférentiellement encore inférieure ou égale à 100 g/ha d'au moins une triazinone de formule (I) de telle sorte que l'aminotriazole se trouve au contact des espèces végétales à détruire en présence de la triazinone, la proportion en poids de triazinone appliquée par rapport à la quantité d'aminotriazole appliquée étant, sous réserve de respecter les susdites doses à l'hectare, de 1 à 14,3%, de préférence de 2,5 à 4% et, plus préférentiellement

encore, 3%,

- les compositions herbicides à base d'aminotriazole conformes à l'invention sont caractérisées par le fait qu'elles contiennent, outre les ingrédients, adjuvants et/ou supports habituellement utilisés, d'une part de l'aminotriazole et d'autre part une proportion en poids par rapport à l'aminotriazole d'environ 1 à 14,3%, de préférence de 2,5 à 4% et, plus préférentiellement encore, 3% d'au moins une triazinone de formule (I), la proportion de triazinone pour une composition donnée étant choisie en tenant compte de ce que ladite composition doit apporter à l'hectare une quantité inférieure à 300 g, de préférence inférieure à 200 g et plus préférentiellement encore inférieure ou égale à 100 g de triazinone.

Du fait de la potentialisation des effets herbicides de l'aminotriazole obtenue grâce à l'invention, une composition conforme à l'invention apportant environ 1000 g d'aminotriazole par hectare est sensiblement aussi efficace qu'une quantité de 3000 g/ha d'aminotriazole appliqué seul.

Selon un mode de réalisation avantageux, le traitement et les compositions herbicides conformes à l'invention mettent en oeuvre l'aminotriazole et la triazinone dans un rapport pondéral de 100/1 à 7/1, de préférence de 40/1 à 25/1 et plus préférentiellement encore de 33/1.

Selon un autre mode de réalisation avantageux, le traitement herbicide conforme à l'invention est caractérisé par le fait que l'on applique par pulvérisation sur les espèces végétales à détruire, simultanément ou séparément l'une de l'autre, deux compositions herbicides respectivement à base d'aminotriazole pour la première et à base d'au moins une triazinone de formule (I) pour la seconde, chacune en des quantités suffisantes pour amener par hectare de la culture traitée

- de 500 à 5000 g et, de préférence, de 1000 à 3000 g d'aminotriazole en ce qui concerne la première, et
- de 5 à 300 g et, de préférence, de 12,5 à 200 g d'au moins une triazinone en ce qui concerne la seconde,

le rapport pondéral entre l'aminotriazole et la triazinone étant de 100/1 à 7/1, de préférence de 40/1 à 25/1 et plus préférentiellement encore de 33/1, ce grâce à quoi on réalise in situ sur la culture la formation de la composition conforme à l'invention.

D'un point de vue plus général, les compositions herbicides à base d'aminotriazole conformes à l'invention peuvent contenir des adjuvants conventionnels tels que les supports solides ou liquides et les agents tensioactifs utilisés habituellement en agriculture.

Elles peuvent aussi comprendre au moins l'un des agents du groupe comprenant les agents activateurs, protecteurs, adhésifs, épaississants, thixotropes, les agents de pénétration, les agents stabilisants, séquestrants, rétenteurs d'eau, colorants, les agents de surface, inhibiteurs de corrosion, diluants et autres.

Il est également possible de faire comporter aux compositions en question d'autres matières actives, notamment au moins l'une de celles du groupe comprenant les herbicides, les fongicides, les insecticides, les régulateurs de la croissance et du développement des plantes et les pesticides, étant rappelé que dans le cadre de la présente invention on désigne par pesticide tout produit chimique utilisé en agriculture autre que les herbicides, les fongicides, les insecticides et les régulateurs de croissance, à savoir par exemple les bactéricides et les antidotes d'herbicide.

Plus généralement, les compositions conformes à l'invention peuvent comporter les additifs solides ou liquides utilisés dans les techniques habituelles de la mise en formulation.

Les compositions herbicides conformes à l'invention peuvent être prêtes à l'emploi ou être établies extemporanément par mélange de deux compositions herbicides respectivement à base d'aminotriazole et à base d'au moins une triazinone de formule (I).

Le procédé de mise en oeuvre des compositions conformes à l'invention est caractérisé par le fait que l'on applique par pulvérisation, sur les espèces végétales à détruire, en pré- ou en post-levée, lesdites compositions en une quantité suffisante pour amener par hectare de culture traitée:

- de 500 à 5000 g et, de préférence, de 1000 à 3000 g d'aminotriazole, et
- de 5 à 300 g et, de préférence, de 12,5 à 200 g d'au moins une triazinone,

le rapport pondéral entre l'aminotriazole et la triazinone étant de 100/1 à 7/1, de préférence de 40/1 à 25/1 et plus préférentiellement encore de 33/1.

L'invention rend possible le contrôle, sur des cultures choisies parmi la vigne, les vergers, les oliviers, les hévéas, les arbres et les arbustes ornementaux, sur la jachère, sur les essences forestières ou sur les zones non agricoles, en désherbage sélectif ou total, de préférence par application en post-levée, d'une grande variété de mauvaises herbes annuelles ou pérennes, mono- ou dicotylédones et notamment de celles du groupe comprenant *Agropyron sp., Allium vineale, Arrhenatherum elatius, Avena fatua, Cirsium arvense, Daucus carota, Epilobium tetragonum, Erigeron canadensis, Erodium cicutarium, Geranium sp., Poa annua, Rumex acetosa, Senecio vulgaris, Stellaria sp., Veronica sp.*

L'invention sera encore mieux comprise à l'aide des exemples non limitatifs qui suivent et dans lesquels se trouvent illustrés des modes de réalisation avantageux.

**EXEMPLE 1**

En vue d'un essai biologique en serre, on a préparé deux compositions conformes à l'invention dont la constitution résulte du tableau I.

TABLEAU I

| | aminotriazole (g/l) | métribuzine (g/l) |
|---|---|---|
| Composition 1 | 120 | 4,5 |
| Composition 2 | 120 | 3 |

Ces compositions sont réalisées à partir:

- d'une part, d'une solution aqueuse d'aminotriazole technique codée CA 1558 et titrant 240 g/l,
- d'autre part, d'une poudre mouillable à 35% de métribuzine commercialisée sous le nom de SENCORAL® 35.

Par exemple, pour obtenir un litre de la composition 1, on prend un demi-litre de CA 1558; on ajoute 12,86 g de SENCORAL® 35 et on complète à 1 litre avec de l'eau.

La composition 2 est fabriquée selon le même procédé en faisant varier les proportions comme il convient pour obtenir les concentrations voulues.

Les compositions 1 et 2 sont appliquées par pulvérisation respectivement à raison de 10 l/ha et 15 l/ha, ce qui correspond, pour la composition 1, à 1200 g/ha d'aminotriazole et 45 g/ha de métribuzine et, pour la composition 2, à 1800 g/ha d'aminotriazole et 45 g/ha de métribuzine; les espèces végétales à détruire sont des plants de *Ambrosia artemisiifolia, Daucus carota, Festuca elatior* et *Sorgum vulgare* cultivés en pots sous serre, puis traités au stade 3-4 feuilles.

On applique également indépendamment l'une de l'autre chacune des deux matières actives entrant dans la constitution des compositions 1 et 2 aux doses correspondant à ces compositions.

28 jours après le traitement, on observe l'effet herbicide de ces compositions sur les espèces traitées.

On appelle "Résultats attendus", le pourcentage de destruction des plantes visées calculé à partir, d'une part, de l'effet de destruction (X) obtenu à l'aide de l'aminotriazole appliqué seul et, d'autre part, de l'effet de destruction (Y) obtenu à l'aide de la triazinone appliquée seule, selon la formule:

$$\text{Résultat attendu} = X + Y - \frac{XY}{100} \quad (A)$$

dans laquelle X et Y représentent des pourcentages de destruction des plantes traitées observés par rapport à un témoin non traité pour lequel la destruction des plantes est considérée comme étant de 0%.

On appelle "Résultats obtenus", le pourcentage de destruction des plantes traitées effectivement observé par rapport au témoin non traité pour lequel la destruction des plantes est considérée comme étant de 0%.

Les résultats obtenus après application de l'aminotriazole et de la triazinone seuls, ceux attendus et calculés par la susdite formule (A) pour les compositions 1 et 2 et, enfin, ceux effectivement observés pour ces compositions sont réunis dans le tableau II.

TABLEAU II

| | Résultats obtenus (%) après application individuelle des constituants des compositions | | | Résultats attendus (%) pour les compositions | | Résultats obtenus (%) pour les compositions | |
|---|---|---|---|---|---|---|---|
| | | | | 1 | 2 | 1 | 2 |
| Aminotriazole (g/ha) | 1200 | 1800 | 0 | 1200 | 1800 | 1200 | 1800 |

TABLEAU II (suite)

| | Résultats obtenus (%) après application individuelle des constituants des compositions | | | Résultats attendus (%) pour les compositions | | Résultats obtenus (%) pour les compositions | |
|---|---|---|---|---|---|---|---|
| | | | | 1 | 2 | 1 | 2 |
| Métribuzine (g/ha) | 0 | 0 | 45 | 45 | 45 | 45 | 45 |
| *Ambrosia artemisiifolia* | 65 | 70 | 10 | 68,5 | 73,0 | 80 | 92 |
| *Daucus carota* | 50 | 55 | 10 | 55,0 | 59,5 | 87 | 95 |
| *Festuca elatior* | 55 | 65 | 15 | 61,8 | 70,3 | 82 | 90 |
| *Sorgum vulgare* | - | 30 | 10 | - | 37,0 | - | 60 |

Les résultats réunis dans ce tableau mettent en évidence l'effet herbicide négligeable de la triazinone appliquée seule; ils illustrent clairement la potentialisation ou effet de dopage de l'aminotriazole par la triazinone, étant entendu qu'il y a potentialisation ou effet synergique chaque fois que les résultats obtenus par les compositions 1 et 2 sont supérieurs aux résultats attendus.

**EXEMPLE 2**

En vue d'un essai biologique en serre, on a préparé quatre compositions désignées 3 à 6 dont la constitution résulte du tableau III.

TABLEAU III

| | aminotriazole (g/l) | métribuzine (g/l) |
|---|---|---|
| Composition 3 | 60 | 2,25 |
| Composition 4 | 60 | 4,5 |
| Composition 5 | 120 | 2,25 |
| Composition 6 | 120 | 4,5 |

Ces compositions sont préparées en procédant comme à l'exemple 1.

Chacune des compositions 3 à 6 est appliquée par pulvérisation à raison de 8 l/ha, ce qui correspond, pour les compositions 3 et 4, à 480 g/ha d'aminotriazole et à respectivement 18 et 36 g/ha de métribuzine et, pour les compositions 5 et 6, à 960 g/ha d'aminotriazole et à respectivement 18 et 36 g/ha de métribuzine; les espèces végétales à détruire sont des plants de *Chenopodium album, Raphanus raphanistrum, Solanum nigrum* et *Lolium multiflorum* cultivés en pots sous serre, puis traités au stade 3-4 feuilles.

On applique également indépendamment l'une de l'autre chacune des deux matières actives entrant dans la constitution des compositions 3 à 6 aux doses correspondant à ces compositions.

Après 28 jours, on observe dans chaque cas l'effet herbicide sur les espèces étudiées.

Les résultats obtenus après application de l'aminotriazole et de la triazinone seuls, ceux attendus et calculés par la susdite formule (A) pour les compositions 3 à 6 et, enfin, ceux effectivement observés pour ces compositions sont réunis dans le tableau IV.

TABLEAU IV

| | Résultats obtenus (%) après application <u>individuelle</u> des constituants des compositions | | | | Résultats attendus (%) pour les compositions | | | | Résultats obtenus (%) pour les compositions | | | |
|---|---|---|---|---|---|---|---|---|---|---|---|---|
| | | | | | 3 | 4 | 5 | 6 | 3 | 4 | 5 | 6 |
| Aminotriazole (g/ha) | 480 | 960 | 0 | 0 | 480 | 480 | 960 | 960 | 480 | 480 | 960 | 960 |
| Métribuzine (g/ha) | 0 | 0 | 18 | 36 | 18 | 36 | 18 | 36 | 18 | 36 | 18 | 36 |
| *Chenopodium album* | 15 | 20 | 0 | 20 | 15,0 | 32,0 | 20,0 | 36,0 | 70 | 100 | 75 | 100 |
| *Raphanus raphanistrum* | 30 | 30 | 20 | 30 | 44,0 | 51,0 | 44.0 | 51,0 | 100 | 100 | 100 | 100 |
| *Solanum nigrum* | 20 | 30 | 0 | 0 | 20,0 | 20,0 | 30,0 | 30,0 | - | 50 | 80 | 80 |
| *Lolium multiflorum* | 30 | 35 | 0 | 0 | 30,0 | 30,0 | 35,0 | 35,0 | 50 | 60 | 65 | 65 |

Ici encore, la potentialisation ou effet de dopage des effets herbicides de l'aminotriazole par la triazinone est clairement mis en évidence par les résultats réunis dans le tableau IV.

**<u>EXEMPLE 3</u>**

En vue d'un essai biologique en serre, on a préparé une composition conforme à l'invention, désignée 7, dont la constitution résulte du tableau V,

TABLEAU V

| | aminotriazole (g/l) | métribuzine (g/l) |
|---|---|---|
| Composition 7 | 192 | 10,5 |

Cette composition est préparée en procédant comme indiqué à l'exemple 1.

La composition 7 est appliquée à la date T par pulvérisation à raison de 5 l/ha, ce qui correspond à 960 g/ha d'aminotriazole et à 52,5 g/ha de métribuzine; les espèces végétales à détruire sont des plants de *Raphanus raphanistrum* cultivés en pots sous serre, puis traités au stade 3-4 feuilles.

On applique également indépendamment l'une de l'autre chacune des deux matières actives entrant dans la constitution de la composition 7 aux doses correspondant à cette composition.

Après T + 14 jours, T + 21 jours et T + 28 jours, on observe dans chaque cas l'effet herbicide sur l'espèce traitée.

Les résultats obtenus après application de l'aminotriazole et de la triazinone seuls, ceux attendus et calculés par la susdite formule (A) pour la composition 7 et, enfin, ceux effectivement observés pour cette composition sont réunis dans le tableau VI.

TABLEAU VI

| | Résultats obtenus (%) après application <u>individuelle</u> des constituants de la composition | | Résultats attendus (%) pour la composition | Résultats obtenus (%) pour la composition |
|---|---|---|---|---|
| Aminotriazole (g/ha) | 960 | 0 | 960 | 960 |
| Métribuzine (g/ha) | 0 | 52,5 | 52,5 | 52,5 |

TABLEAU VI (suite)

| | Résultats obtenus (%) après application <u>individuelle</u> des constituants de la composition | | Résultats attendus (%) pour la composition | Résultats obtenus (%) pour la composition |
|---|---|---|---|---|
| T + 14 jours | 30 | 20 | 44,0 | 80 |
| T + 21 jours | 50 | 10 | 55,0 | 100 |
| T + 28 jours | 30 | 45 | 61,5 | 100 |

Les résultats réunis dans ce tableau montrent que la potentialisation ou effet de dopage de l'aminotriazole par la triazinone peut se manifester précocement dans le temps, dès 14 jours après la date du traitement.

**EXEMPLE 4**

L'exemple 4 rend compte des résultats de quatre essais biologiques, A, B, C et D, menés sur vigne cultivée en plein champ en parcelles d'agriculteur. Les essais, dont les conditions sont précisées au tableau VII, sont réalisés selon un dispositif en blocs à deux répétitions avec témoin inclus. La surface des parcelles élémentaires est de 40 $m^2$.

TABLEAU VII

| N° essai | A | B | C | D |
|---|---|---|---|---|
| Localisation | 30-Pouzilhac France | 84-Valras France | 81-Amarens France | 49-Brissac-Quincé France |
| Cépage | Grenache noir | Carignan | Cabernet Sauvignon | Cabernet franc |
| Epoque de traitement | début mars | mi-mars | mi-mars | début mars |
| Stade du développement au moment du traitement selon l'échelle Eichhorn-Lorenz | 03 | 03 | 01 | 03 |
| Température (°C) | | | | |
| - au traitement | 19 | 16 | 13 | 17 |
| - minimale | 10 | 10 | 04 | 06 |
| - maximale | 20 | 20 | 13 | 17 |

Dans ces essais, on a utilisé la composition conforme à l'invention désignée 8 dont la constitution résulte du tableau VIII.

TABLEAU VIII

| | aminotriazole (g/l) | métribuzine (g/l) |
|---|---|---|
| Composition 8 | 5,76 | 0,12 |

Cette composition est réalisée à partir:

- d'une part, d'une poudre codée CA27 et contenant 100% en poids d'aminotriazole,
- d'autre part, d'une poudre mouillable contenant 70% en poids de métribuzine et commercialisée sous le nom de SENCORAL®.

Par exemple, pour obtenir un litre de la composition 8, on dilue 5,76 g de CA27 dans 10 à 20 ml d'eau; on ajoute 0,17 g de SENCORAL puis on complète à un litre avec de l'eau.

On a également utilisé deux autres compositions désignées respectivement par 9 et 10 à base uniquement d'aminotriazole et titrant respectivement 5,76 g/l et 7,2 g/l d'aminotriazole; elles sont obtenues à partir de la poudre CA27.

Les trois compositions sont appliquées à raison de 500 l/ha par pulvérisation sur les espèces végétales à détruire, ce qui correspond:

- pour la poudre 8, à 2880 g/ha d'aminotriazole et 60 g/ha de métribuzine,
- pour les poudres 9 et 10, respectivement à 2880 g/ha et à 3600 g/ha d'aminotriazole seul.

Après un mois, on note l'effet herbicide de ces compositions sur les espèces présentes. Les résultats obtenus sont exprimés en pourcentage de destruction des plantes traitées par rapport à un témoin non traité pour lequel la destruction des plantes est considérée comme étant de 0%.

Les résultats des essais A, B, C et D sont présentés respectivement dans les tableaux IX, X, XI et XII.

TABLEAU IX

| (les résultats sont la moyenne de deux répétitions) | | | |
|---|---|---|---|
| | Résultats obtenus (%) pour les compositions | | |
| | 8 | 9 | 10 |
| Aminotriazole (g/ha) | 2880 | 2880 | 3600 |
| Métribuzine (g/ha) | 60 | 0 | 0 |
| *Chondrilla juncea* | 100 | 85 | 100 |
| *Erodium cicutarium* | 68 | 18 | 45 |
| *Geranlum molle* | 100 | 63 | 100 |
| *Stellaria media* | 100 | 75 | 100 |
| *Tordylium maximum* | 100 | 50 | 100 |

TABLEAU X

| (les résultats sont la moyenne de deux répétitions) | | | |
|---|---|---|---|
| | Résultats obtenus (%) pour les compositions | | |
| | 8 | 9 | 10 |
| Aminotriazole (g/ha) | 2880 | 2880 | 3600 |
| Métribuzine (g/ha) | 60 | 0 | 0 |
| *Cardamine hirsuta* | 100 | 65 | 75 |
| *Crepis species* | 95 | 75 | 85 |

TABLEAU XI

| (les résultats sont la moyenne de deux répétitions) | | | |
|---|---|---|---|
| | Résultats obtenus (%) pour les compositions | | |
| | 8 | 9 | 10 |
| Aminotriazole (g/ha) | 2880 | 2880 | 3600 |

TABLEAU XI (suite)

| (les résultats sont la moyenne de deux répétitions) | | | |
|---|---|---|---|
| | Résultats obtenus (%) pour les compositions | | |
| | 8 | 9 | 10 |
| Métribuzine (g/ha) | 60 | 0 | 0 |
| *Calepina irregularis* | 78 | 43 | 50 |
| *Crepis sancta* | 75 | 45 | 63 |
| *Erodium cicutarium* | 60 | 28 | 40 |
| *Sonchus oleraceus* | 93 | 45 | 75 |
| *Veronica persica* | 99 | 42 | 55 |

TABLEAU XII

| (les résultats sont la moyenne de deux répétitions) | | | |
|---|---|---|---|
| | Résultats obtenus (%) pour les compositions | | |
| | 8 | 9 | 10 |
| Aminotriazole (g/ha) | 2880 | 2880 | 3600 |
| Métribuzine (g/ha) | 60 | 0 | 0 |
| *Cirsium arvense* | 80 | 60 | 79 |
| *Erodium cicutarium* | 97 | 78 | 98 |

L'examen des résultats réunis dans les tableaux IX, X, XI et XII permet de constater que:

- d'une part, à quantité égale d'aminotriazole appliquée par hectare, l'adjonction de triazinone à l'amino-triazole permet d'obtenir une efficacité nettement supérieure à celle de l'aminotriazole appliqué seul, le gain d'efficacité variant de 20 à 60% selon l'espèce adventice considérée,
- d'autre part, les performances de l'aminotriazole dopé par la triazinone ne sont pas égalées par l'aminotriazole appliqué seul à une dose 1,25 fois plus élevee.

D'un point de vue plus général, les résultats des essais réalisés tant en serre qu'en plein champ illustrent la potentialisation de l'aminotriazole par une faible proportion de triazinone.

L'aminotriazole étant mieux valorisé, on peut:

- pour une même quantité d'aminotriazole, obtenir un meilleur niveau d'efficacité,
- pour un effet escompté donné, réduire la quantité d'aminotriazole appliquée, d'où un coût d'utilisation moindre et un meilleur respect de l'environnement.

## Revendications

1. Traitement herbicide à base d'aminotriazole caractérisé par le fait qu'on applique sur les espèces végétales à détruire, simultanément ou séparément l'un de l'autre, d'une part une quantité de 500 à 5000 g/ha d'aminotriazole et, d'autre part une quantité inférieure à 300 g/ha, de préférence inférieure à 200 g/ha et plus préférentiellement encore inférieure ou égale à 100 g/ha d'au moins une triazinone de formule:

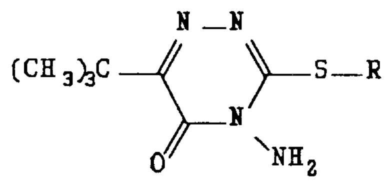

(I)

dans laquelle R représente un radical alkyle à chaîne rectiligne ou ramifiée comportant de 1 à 4 atomes de carbone,
de telle sorte que l'aminotriazole se trouve au contact des espèces végétales à détruire en présence de la triazinone, la proportion en poids de triazinone appliquée par rapport à la quantité d'aminotriazole appliquée étant, sous réserve de respecter les susdites doses à l'hectare, d'environ 1 à 14,3%, de préférence de 2,5 à 4% et, plus préférentiellement encore, de 3%.

**2.** Compositions herbicides à base d'aminotriazole caractérisées par le fait qu'elles contiennent, outre les ingrédients, adjuvants et/ou supports habituellement utilisés, d'une part de l'aminotriazole et d'autre part une proportion en poids par rapport à l'aminotriazole d'environ 1 à 14,3%, de préférence de 2,5 à 4% et, plus préférentiellement encore, de 3% d'au moins une triazinone de formule:

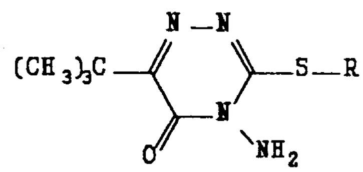

(I)

dans laquelle R représente un radical alkyle à chaîne rectiligne ou ramifiée comportant de 1 à 4 atomes de carbone, la proportion de triazinone pour une composition donnée étant choisie en tenant compte de ce que ladite composition doit apporter à l'hectare une quantité inférieure à 300 g, de préférence inférieure à 200 g et plus préférentiellement encore inférieure ou égale à 100 g de triazinone.

**3.** Traitement herbicide à base d'aminotriazole selon la revendication 1, caractérisé par le fait qu'il met en oeuvre l'aminotriazole et la triazinone dans un rapport pondéral de 100/1 à 7/1 et, de préférence, de 40/1 à 25/1 et plus préférentiellement encore de 33/1.

**4.** Compositions herbicides à base d'aminotriazole selon la revendication 2, caractérisées par le fait qu'elles contiennent l'aminotriazole et la triazinone dans un rapport pondéral de 100/1 à 7/1 et, de préférence, de 40/1 à 25/1 et plus préférentiellement encore de 33/1.

**5.** Traitement herbicide à base d'aminotriazole selon l'une des revendications 1 et 3, caractérisé par le fait que l'on applique par pulvérisation sur les espèces végétales à détruire, simultanément ou séparément l'une de l'autre, deux compositions herbicides respectivement à base d'aminotriazole pour la première et à base d'au moins une triazinone de formule (I) pour la seconde, chacune en des quantités suffisantes pour amener par hectare de la culture traitée

- de 500 à 5000 g et, de préférence, de 1000 à 3000 g d'aminotriazole en ce qui concerne la première, et
- de 5 à 300 g et, de préférence, de 12,5 à 200 g d'au moins une triazinone en ce qui concerne la seconde, le rapport pondéral entre l'aminotriazole et la triazinone étant de 100/1 à 7/1, de préférence de 40/1 à 25/1 et plus préférentiellement encore de 33/1, ce grâce à quoi on réalise in situ sur la culture la formation des compositions selon l'une des revendications 2 et 4.

**6.** Compositions herbicides à base d'aminotriazole selon l'une des revendications 2 et 4, caractérisées par le fait qu'elles contiennent des adjuvants conventionnels tels que les supports solides ou liquides et les agents tensioactifs utilisés habituellement en agriculture.

7. Compositions herbicides à base d'aminotriazole selon l'une des revendications 2, 4 et 6, caractérisées par le fait qu'elles contiennent au moins l'un des agents du groupe comprenant les agents activateurs, protecteurs, adhésifs, épaississants, thixotropes, les agents de pénétration, les agents stabilisants, séquestrants, rétenteurs d'eau, colorants, les agents de surface, inhibiteurs de corrosion, diluants.

8. Compositions herbicides à base d'aminotriazole selon l'une des revendications 2, 4, 6 et 7, caractérisées par le fait qu'elles contiennent au moins une autre matière active du groupe comprenant les herbicides, les fongicides, les insecticides, les régulateurs de la croissance et du développement des plantes et les pesticides.

9. Procédé de mise en oeuvre des compositions selon l'une des revendications 2, 4 et 6 à 8, caractérisé par le fait que l'on applique par pulvérisation, sur les espèces végétales à détruire, en pré- ou en post-levée, lesdites compositions en une quantité suffisante pour amener par hectare de culture traitée:

- de 500 à 5000 g et, de préférence, de 1000 à 3000 g d'aminotriazole, et
- de 5 à 300 g et, de préférence, de 12,5 à 200 g d'au moins une triazinone,
  le rapport pondéral entre l'aminotriazole et la triazinone étant de 100/1 à 7/1, de préférence de 40/1 à 25/1 et plus préférentiellement encore de 33/1, ce grâce à quoi on réalise in situ sur la culture la formation des compositions selon l'une des revendications 2, 4 et 6 à 8.

10. Compositions herbicides à base d'aminotriazole selon l'une des revendications 2, 4, 6 à 8, caractérisées par le fait que la triazinone de formule (I) est la métribuzine.

11. Compositions herbicides à base d'aminotriazole selon l'une des revendications 2, 4, 6 à 8, caractérisées par le fait que la triazinone de formule (I) est l'éthiozine.

**Claims**

1. Herbicidal treatment based on aminotriazole characterized by the fact that there are applied to the plant species to be destroyed, simultaneously or separately from one another, on the one hand an amount from 500 to 5000 g/ha of aminotriazole and, on the other hand an amount lower than 300 g/ha, preferably lower than 200 g/ha and still more preferably lower than or equal to 100 g/ha of at least one triazinone of formula:

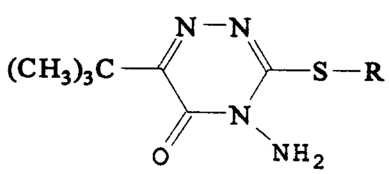

(I)

wherein R represents a linear or branched alkyl radical comprising from 1 to 4 carbon atoms,
in such a way that the aminotriazole is in the presence of the triazinone when coming into contact with the plant species to be destroyed, the proportion by weight of triazinone used with respect to the amount of aminotriazole used being, provided that the abovesaid rates per hectare are observed, from about 1 to 14.3%, preferably from 2.5 to 4% and, still more preferably, of 3%.

2. Herbicidal compositions based on aminotriazole characterized by the fact that they contain, besides the usual constituents, adjuvants and/or supports, on the one hand aminotriazole and on the other hand a proportion by weight with respect to the aminotriazole from about 1 to 14.3%, preferably from 2.5 to 4% and, still morepreferably, of 3% of at least one triazinone of formula

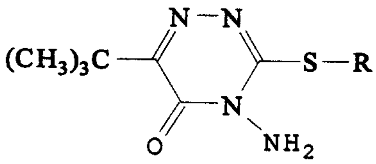

(I)

wherein R represents a linear or branched alkyl radical comprising from 1 to 4 carbon atoms, the proportion of triazinone in a given composition being selected taking into account; the fact that the said composition should provide per hectare an amount of triazinone lower than 300 g, preferably lower than 200 g and still more preferably lower than or equal to 100 g.

3. Herbicidal treatment based on aminotriazole according to claim 1, characterized by the fact that aminotriazole and triazinone are used in a weight ratio from 100/1 to 7/1 and, preferably, from 40/1 to 25/1 and still more preferably of 33/1.

4. Herbicidal compositions based on aminotriazole according to claim 2, characterized by the fact that they contain aminotriazole and triazinone in a weight ratio from 100/1 to 7/1 and, preferably, from 40/1 to 25/1 and still more preferably of 33/1.

5. Herbicidal treatment based on aminotriazole according to one of claims 1 and 3, characterized by the fact that there are applied by spraying on the plant species to be destroyed, simultaneously or separately from one another, two herbicidal compositions respectively based on aminotriazole as far as the first is concerned and on at least one triazinone of formula (I) as far as the second is concerned, each one in amounts sufficient to provide per hectare of the land under cultivation

- from 500 to 5000 g and preferably from 1000 to 3000 g of aminotriazole as far as the first herbicidal composition is concerned, and
- from 5 to 300 g and preferably from 12.5 to 200 g of at least one triazinone as far as the second herbicidal composition is concerned,

the weight ratio between aminotriazole and triazinone being from 100/1 to 7/1, preferably from 40/1 to 25/1 and still more preferably of 33/1, due to which there is achieved, in situ on the plants, the formation of the compositions according to one of claims 2 and 4.

6. Herbicidal compositions based on aminotriazole according to one of claims 2 and 4, characterized by the fact that they contain usual adjuvants such as solid or liquid supports as well as the surfactive agents normally used in agriculture.

7. Herbicidal compositions based on aminotriazole according to one of claims 2, 4 and 6, characterized by the fact that they contain at least one of the agents of the group comprising activating agents, protecting agents, adhesives, thickeners, thixotropic agents, penetration agents, stabilizing agents, sequestering agents, water retention agents, dyes, surface agents, corrosion inhibitors, diluents.

8. Herbicidal compositions based on aminotriazole according to one of claims 2, 4, 6 and 7, characterized by the fact that they contain at least another active material of the group comprising the herbicides, the fungicides, the insecticides, the growth regulators and the development regulators of plants, as well as the pesticides.

9. Process implementing the compositions according to one of claims 2, 4 and 6 to 8, characterized by the fact that they are applied said compositions by spraying, on the plant species to be destroyed, in pre-emergence or post-emergence, in an amount sufficient to provide per hectare of land of cultivation:

- from 500 to 5000 g and preferably from 1000 to 3000 g of aminotriazole, and
- from 5 to 300 g and preferably from 12.5 to 200 g of at least one triazinone,

the weight ratio between aminotriazole and triazinone being from 100/1 to 7/1, preferably from 40/1 to 25/1 and still more preferably of 33/1, due to which there is achieved, in situ on the plants, the formation of the compositions according to one of claims 2, 4 and 6 to 8.

**10.** Herbicidal compositions according to one of claims 2, 4, 6 to 8, characterized by the fact that the triazinone of formule (I) is metribuzine.

**11.** Herbicidal compositions according to one of claims 2, 4, 6 to 8, characterized by the fact that the triazinone of formule (I) is ethiozine.

**Patentansprüche**

**1.** Herbizidbehandlung auf Aminotriazol-Basis, dadurch gekennzeichnet, daß man auf die zu vernichtenden Pflanzenspezies gleichzeitig oder voneinander getrennt einerseits eine Menge von 500 bis 5000 g/ha Aminotriazol und andererseits eine Menge von Weniger als 300 g/ha, bevorzugt weniger als 200 g/ha und noch stärker bevorzugt weniger oder gleich 100 g/ha mindestens eines Triazinons nach Formel:

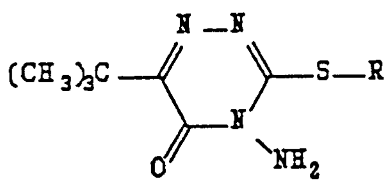

(I),

Worin R einen geradkettigen oder verzweigten, 1 bis 4 Kohlenstoffe umfassenden Alkylrest darstellt, aufbringt, so daß das Aminotriazol in Gegenwart des Triazinons mit den zu vernichtenden Pflanzenspezies in Kontakt kommt, wobei der Gewichtsanteil von aufgebrachtem Triazinon bezogen auf die aufgebrachte Menge von Aminotriazol unter Berücksichtigung der vorstehenden Hektardosierungen etwa 1 bis 14,3 %, bevorzugt 2,5 bis 4 % und noch stärker bevorzugt 3 % ist.

**2.** Herbizidzusammensetzungen auf Aminotriazol-Basis, dadurch gekennzeichnet, daß sie neben üblicherweise verwendeten Bestandteilen, Zusatzstoffen und/oder Trägern einerseits Aminotriazol und andererseits mindestens ein Triazinon nach Formel:

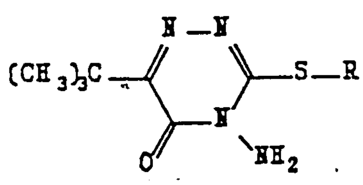

(I),

worin R einen geradkettigen oder verzweigten, 1 bis 4 Kohlenstoffe umfassenden Alkylrest darstellt, in einem Gewichtsverhältnis bezogen auf das Aminotriazol von etwa 1 bis 14,3 %, bevorzugt 2,5 bis 4 % und noch stärker bevorzugt 3 % enthält, wobei der Triazinon-Anteil für eine gegebene Zusammensetzung derart ausgewählt ist, daß durch die Zusammensetzung eine Menge von weniger als 300 g, bevorzugt weniger als 200 g und noch stärker bevorzugt weniger oder gleich 100 g Triazinon pro Hektar aufgebracht wird.

**3.** Herbizidbehandlung auf Aminotriazol-Basis nach Anspruch 1, dadurch gekennzeichnet, daß man das Aminotriazol und das Triazinon in einem Gewichtsverhältnis von 100/1 bis 7/1 und bevorzugt von 40/1 bis 25/1 und noch stärker bevorzugt von 33/1 verwendet.

**4.** Herbizidzusammensetzungen auf Aminotriazol-Basis nach Anspruch 2, dadurch gekennzeichnet, daß sie das Aminotriazol und das Triazinon in einem Gewichtsverhältnis von 100/1 bis 7/1 und bevorzugt von 40/1 bis 25/1 und noch stärker bevorzugt von 33/1 enthalten.

**5.** Herbizidbehandlung auf Aminotriazol-Basis nach einem der Ansprüche 1 und 3, dadurch gekennzeichnet, daß man auf die zu vernichtenden Pflanzenspezies gleichzeitig oder voneinander getrennt zwei Herbizidzusammensetzungen durch Verteilen aufbringt, wobei die erste auf Aminotriazol basiert und die zweite auf mindestens einem Triazinon nach Formel (I) basiert, jede in ausreichenden Mengen um pro Hektar der behandelten Kultur

- 500 bis 5000 g und bevorzugt 1000 bis 3000 g Aminotriazol, betreffend die erste, und
- 5 bis 300 g und bevorzugt 12,5 bis 200 g mindestens eines Triazons, betreffend die zweite,

aufzubringen, wobei das Gewichtsverhältnis des Aminotriazols zu dem Triazinon 100/1 bis 7/1 und bevorzugt 40/1 bis 25/1 und noch stärker bevorzugt 33/1 ist, was bewirkt wird durch Bilden von Zusammensetzungen nach einem der Ansprüche 2 und 4 in situ auf der Kultur.

**6.** Herbizidzusammensetzungen auf Aminotriazol-Basis nach einem der Ansprüche 2 und 4 dadurch gekennzeichnet, daß sie herkömmliche Zusatzstoffe, wie die in der Landwirtschaft üblicherweise verwendeten festen oder flüssigen Träger und oberflächenaktiven Mittel, enthalten.

**7.** Herbizidzusammensetzungen auf Aminotriazol-Basis nach einem der Ansprüche 2, 4 und 6, dadurch gekennzeichnet, daß sie mindestens ein Mittel aus der Gruppe, umfassend die Aktivatoren, Schutzmittel, Adhäsive, Verdickungsmittel, thixotropen Mittel, Penetrationsmittel, Stabilisatoren, Komplexbildner, Wasserretentionsmittel, Farbstoffe, oberflächenaktiven Mittel, Korrosionshemmer, Verdünnungsmittel, enthalten.

**8.** Herbizidzusammensetzungen auf Aminotriazol-Basis nach einem der Ansprüche 2, 4, 6 und 7, dadurch gekennzeichnet, daß sie mindestens einen weiteren Wirkstoff aus der Gruppe, umfassend die Herbizide, die Fungizide, die Insektizide, die Pflanzenwachstumsregulatoren und Pflanzenentwicklungsregulatoren und die Pestizide enthalten.

**9.** Verfahren zur Verwendung von Zusammensetzungen nach einem der Ansprüche 2, 4 und 6 bis 8, dadurch gekennzeichnet, daß man die Zusammensetzungen vor oder nach dem Keimen auf die zu vernichtenden Pflanzenspezies durch Verteilen aufbringt, in einer ausreichenden Menge um pro Hektar der behandelten Kultur

- 500 bis 5000 g und bevorzug! 1000 bis 3000 g Aminotriazol, und
- 5 bis 300 g und bevorzugt 12,5 bis 200 g mindestens eines Triazons

aufzubringen, wobei das Gewichtsverhältnis des Aminotriazols zu dem Triazinon 100/1 bis 7/1, bevorzugt 40/1 bis 25/1 und noch stärker bevorzugt 33/1 ist, was bewirkt wird durch Bilden von Zusammensetzungen nach einem der Ansprüche 2, 4 und 6 bis 8 in situ auf der Kultur.

**10.** Herbizidzusammensetzungen auf Aminotriazol-Basis nach einem der Ansprüche 2, 4, 6 bis 8, dadurch gekennzeichnet, daß das Triazinon nach Formel (I) Metribuzin ist.

**11.** Herbizidzusammensetzungen auf Aminotriazol-Basis nach einem der Ansprüche 2, 4, 6 bis 8, dadurch gekennzeichnet, daß das Triazinon nach Formel (I) Ethiozin ist.